# EUROPEAN PATENT APPLICATION

(11) **EP 4 617 471 A1**
(43) Date of publication of application: **17.09.2025**
(21) Application number: 25162619.8
(22) Date of filing: 10.03.2025
(51) Int. Cl.: E06B 9/72, F16D 3/64, F16F 15/12

(54) **A TUBULAR DRIVE ARRANGEMENT WITH A RESILIENT DAMPER, A SCREENING ARRANGEMENT INCORPORATING SUCH A TUBULAR DRIVE ARRANGEMENT, AND A METHOD OF ASSEMBLING A SCREENING ARRANGEMENT**

(30) Priority: 15.03.2024 DK PA202470082
(71) Applicant: VKR Holding A/S, 2970 Hørsholm (DK)
(72) Inventor: HESTBÆK, Allan Dalsgaard, 2970 Hørsholm (DK)
(74) Representative: AWA Denmark A/S

(57) **Abstract**

A tubular drive arrangement (20) for a screening arrangement (10) for a window, in which a drive part (24) coupled to drive shaft and a motor of the drive arrangement comprise engagement means (24.1, 24.2) configured to be connected to counterpart engagement means (12.1, 12.2) of a roller tube (12) of the screening arrangement in an assembled condition. At least one resilient damper (31, 32) is connected to or connectable to the engagement means (24.1, 24.2, 24.3) of the drive part (24).

## Description

### Technical Field

The present invention relates to a tubular drive arrangement for a screening arrangement for a window such as a roof window, comprising an electric drive motor, a gear, a drive shaft, and a drive part coupled to the drive shaft and comprising engagement means configured to be connected to counterpart engagement means of a roller tube of the screening arrangement in an assembled condition. The invention furthermore relates to a screening arrangement comprising such a tubular drive arrangement and to a method of assembling a screening arrangement.

### Background Art

It is well-known to include tubular drive arrangements in a variety of screening arrangements. Examples of screening arrangements with a drive arrangement is shown and described in WO 2021/104592 A1. While the operation of screening arrangements by means of such tubular drive arrangements is typically very reliable, vibration and ensuing acoustical noise often ensue.

In the prior art, several attempts have been made to support the drive arrangement in order to mitigate the nuisance of noisy operation. However, there is still room for improvement.

### Summary of Invention

With this background, it is therefore an object of the invention to provide a tubular drive arrangement by which it is possible to reduce the noise.

In a first aspect, this and further objects are achieved with a tubular drive arrangement of the kind mentioned in the introduction which is furthermore characterised in that the tubular drive arrangement further comprises at least one resilient damper, and the resilient damper is connected to or connectable to the engagement means of the drive part.

With the provision of a resilient damper at the engagement means of the drive part, the force transmission between the drive part, which is coupled to the drive shaft and motor, and the roller tube of the screening arrangement during rotation of the drive part and roller tube is carried out via the resilient damper(s) and hence, the vibrations from the motor are isolated such that propagation of vibrations to the roller tube and in turn to the rest of the screening arrangement is reduced or even eliminated.

Without wishing to be bound by theory, it is believed that the risk of resonance is reduced by the resilience of the dampers.

In general, lower levels of noise emanating from operating the screening arrangement are obtained. This is particularly valuable during movement of the screening arrangement between the non-screening and fully screening positions, the duration of which may amount to 20 to 30 seconds, which may be experienced as a long time if operation is noisy; however, with the present invention, it has been possible to render this operation virtually silent. At the end positions of the screening arrangements, the drive arrangement applies a significantly higher torque, since most drive arrangements operate with a set threshold for the motor drive current at which the motor is brought to a halt. In turn, this means that the pressure applied by the drive part to the roller tube may be quite substantial at the end positions of the screening arrangement. Nevertheless, it has been found possible to reduce the noise level substantially at the end positions as well.

The term "resilient" denotes a spring-like quality of the damper and suitable spring performance is obtained by adapting the shape of resilient damper(s) and/or the hardness of the selected material.

The spring rate of the resilient damper(s) may in principle be linear; however, it is preferred to select components and material in which the spring force is by nature progressive, that is, more torque applied by the drive part to the roller tube equals substantially more resistance from the resilient damper.

The term "damper" implies a damping capacity of the damper, i.e. a mechanical property of materials which indicates the ability to dissipate elastic strain energy during mechanical vibration or wave propagation.

The term "connected to" is to be interpreted as encompassing the provision of the resilient damper(s) at the engagement means of the drive part by any suitable fastening techniques.

The term "connectable to" is to be interpreted to encompass that the resilient damper(s) may be formed as separate components which are configured to be connected to the engagement means of the drive part or to the roller tube of the screening arrangement during assembly. The resilient damper(s) may be provided as sub-components which may be individually connected to the engagement means of the drive part, to the roller tube of the screening arrangement, or to both of these components.

The resilient damper(s) may be provided on the drive part. The resilient damper(s) may be provided on the roller tube of the screening arrangement. The resilient damper(s) may be connected to one or both of these components in the assembled condition of the tubular drive arrangement. Suitable fastening techniques include mechanical fastening means such as snap connections, form-fitting connections and separate fasteners, adhesion, welding, co-casting, co-moulding, co-extrusion etc. The resilient damper(s) may be provided as a separate unit or form an integrally connected part of the drive part or the roller tube. The resilient damper(s) may be configured to be inserts, such that the damper(s) is at least partly shaped to be inserted into the engagement means of the drive part. Consequently, the wording "resilient damper insert" may be used for what in the rest of the document is called "resilient damper".

The drive part of the tubular drive arrangement has the function of a coupler or motor head coupled to the drive shaft and in turn to the motor and may in principle take any suitable form. In one embodiment, the drive part is formed as a substantially disc-shaped component, comprising a base portion with a central aperture configured to receive the drive shaft in the assembled condition of the tubular drive arrangement, and a perimeter portion defining a periphery of the drive part. In this way, the drive part may be manufactured with suitable geometry and material properties by for instance moulding to allow flexible provision of the engagement means to interact with the roller tube. Preferably, a set of teeth is provided in the central aperture to interact with the drive shaft.

In one presently preferred embodiment, the engagement means of the drive part comprise a set of recesses configured to cooperate with a set of protrusions provided in the roller tube and forming the counterpart engagement means of the roller tube of the screening arrangement. Such a recess/protrusion pairing provides for excellent force transmitting properties and also allows easy application and safe retention of the resilient damper(s) in the assembled condition of the tubular drive arrangement and screening arrangement. The recess or recesses may take any suitable form such as I-shaped, L-shaped, or U-shaped. If a plurality of recesses are provided, the recesses are preferably positioned at different angular positions. In one development of this embodiment, a first recess and a second recess are positioned at substantially opposite positions along the perimeter of the drive part.

In an embodiment, the drive part comprises a first material with a first set of material properties as defined by Shore A value and/or E modulus, preferably of a relatively hard plastic material, the drive part being more preferably provided as a moulded component of a reinforced polymer material such as polybutylene terephthalate with 30 percent glass fibres, (PBT GF30). Since the drive part needs to be able to transmit the torque from the drive shaft, a relatively robust material is typically selected.

Each resilient damper preferably comprises a component having a pre-defined damping capacity and being capable of being formed to offer a range of resilient or spring-like properties. The requirements to the resilient damper include not only a suitable damping capacity, i.e. the ability to dissipate elastic strain energy during mechanical vibration or wave propagation, but also sufficient shapability to provide the desired resilience and also to allow the resilient damper to be connected to the drive part and/or the roller tube.

The resilient dampers may comprise a single material or be a composite component of two or more parts, possibly with different material properties such as a pressure spring and a block of a suitable dampening material which are combined into a spring-dashpot unit.

In a presently preferred embodiment, each resilient damper comprises a one-piece component of a second material with a second set of material properties as defined by Shore A value and/or E modulus, preferably a silicone material such as a liquid silicone rubber (LSR) material with a Shore A value below 90, more preferably a Shore A value below 70, most preferably a Shore A value of 60. Silicone as a selected material has proven to show a superior combination of material properties in terms of being able to balance damping properties with a range of resilient, or spring, properties by a suitable selection of shape and hardness of the resilient damper(s). By the use of silicone it has proven possible to obtain superior combinations of resilient and damping properties compared to for instance thermoplastic materials. By forming each resilient damper of silicone, suitable ratios of spring and damping properties present relatively high spring forces combined with relatively low damping capability. Furthermore, it is possible to provide the resilient damper(s) with a progressive spring rate such that the resistance is substantially larger when the applied torque is elevated.

In an embodiment, which is advantageous in terms of manufacture and reliable transmission of forces during operation, each resilient damper is configured to be positioned in a space defined between walls of the respective recess and facing surfaces of the corresponding protrusion of the roller tube of the screening arrangement in the assembled condition of the tubular drive arrangement such that a set of well-defined contact points between the resilient damper(s) and the protrusion(s) is formed.

In an advantageous further development of this embodiment, each resilient damper is provided in a respective recess of the drive part, preferably as a one-piece component which is co-moulded with the drive part. In this way, the tubular drive arrangement may be provided as a self-contained unit with a set of integral resilient damper(s) which is readily arranged in a roller tube of any screening arrangement.

In an embodiment in which the walls of the respective recess comprise side walls, said side walls preferably protrude beyond the perimeter portion of the drive part in the radial direction. In this way, a clearance is obtained between the perimeter of the drive part and the inside of the roller tube except for at the location(s) of the recess/protrusion pairing(s), thus reducing the risk of any unwarranted contact between the roller tube and the drive part outside the resiliently dampened engagement means. The walls more preferably comprising a bottom wall forming an angle to the side walls and located radially inside the perimeter portion of the drive part. This configuration is particularly advantageous from a manufacturing perspective but also provides an enlarged contact area.

The resilient damper(s) may provide a spring force and damping between the engagement means of the drive part of the tubular drive arrangement and the counterpart engagement means of the roller tube of the screening arrangement tangentially only, or also in radial direction.

In one embodiment, each resilient damper comprises a set of side contact portions configured to interact with the side walls of the respective recess, said side contact portions preferably having a larger extension in the radial direction than the side walls such that a radially outer surface of the side contact portions are in contact with the roller tube in the assembled condition. This arrangement increases the contact area even further and thus reduces the risk of contact between the roller tube and the drive part outside the established engagement means even further.

In a further embodiment, each resilient damper comprises a set of anchor portions configured to cooperate with a counterpart set of openings of the recesses in the drive part. Such anchor portions ensure improved retention of the resilient dampers on the drive part. Preferably, at least a set of side anchor portions for cooperation with cut-outs in the side walls of the recesses are provided. More preferably, the anchor portions also comprise a pin anchor portion for cooperation with a hole at the perimeter portion of the drive part.

The resilient damper(s) may in principle take any suitable form, as long as they are able to fulfil the function of acting as a resilient damper between the engagement means of the drive part and the counterpart engagement means of the roller tube. They may for instance assume the shape of one or the other of the engagement means of the drive part or roller tube.

In one embodiment, each resilient damper is substantially U-shaped and comprises a bottom portion between the side contact portions, the bottom portion comprising at least one substantially plane section, or the bottom portion being curved.

In a second aspect, a screening arrangement is provided, comprising a top casing, a roller tube arranged in the top casing and comprising counterpart engagement means, and a tubular drive arrangement arranged in the roller tube in the top casing, the engagement means of the drive part being connected to the counterpart engagement means of the roller tube in the assembled condition of the tubular drive arrangement in the screening arrangement.

In this way, a screening arrangement with excellent performance during operation is provided.

In a third aspect, a method of assembling a screening arrangement is devised. By the method, the following steps are carried out: providing a tubular drive arrangement with electric drive motor, gear, drive shaft, and drive part, providing a roller tube, providing at least one resilient damper, connecting the at least one resilient damper to engagement means of the drive part of the tubular drive arrangement and/or to counterpart engagement means of the roller tube, arranging the tubular drive arrangement in the roller tube to assume an assembled condition of the tubular drive arrangement, and placing the assembled tubular drive arrangement and roller tube in the top casing of the screening arrangement, thereby obtaining an assembled condition of the screening arrangement.

The inventive method has proven to offer optimum flexibility in the supply and assembly of the components of the screening arrangement, such that a tubular drive arrangement with standard electric drive motor, gear and drive shaft may be supplied from one side, and a tailored drive part from another, the drive part being supplied with the resilient damper(s) already in place or supplied separately and configured for retrofitting. The connection between the resilient damper(s) and the drive part and/or roller tube may be releasable.

Other presently preferred embodiments and further advantages will be apparent from the subsequent detailed description and drawings.

A feature described in relation to one of the aspects may also be incorporated in the other aspect, and the advantage of the feature is applicable to all aspects in which it is incorporated.

### Brief Description of Drawings

In the following description embodiments of the invention will be described with reference to the schematic drawings, in which
Fig. 1 is a perspective view of a general embodiment of a screening arrangement mounted on a roof window as indicated in the prior art;
Fig. 2 is a sectional view of the screening arrangement of Fig. 1;
Fig. 3 is a perspective view of a tubular drive arrangement in a first embodiment of the invention;
Fig. 4 is an exploded perspective view of the tubular drive arrangement of Fig. 3;
Fig. 5 is a front view of a detail of the tubular drive arrangement of Figs. 3 and 4;
Fig. 6 is a perspective view of the detail shown in Fig. 5;
Fig. 7 is a front view of details of a screening arrangement in a second embodiment of the invention;
Fig. 8 is a front view of details of a screening arrangement in a third embodiment of the invention;
Fig. 9 is partial front view of details of a screening arrangement in a fourth embodiment of the invention;
Figs. 10 and 11 are perspective views of a drive part with two resilient dampers in a fifth embodiment of the tubular drive arrangement according to the invention and from different angles;
Fig. 12 is an exploded perspective view of the drive part of Figs. 10 and 11;
Fig. 13 is a partial exploded perspective view of details of the drive part of Figs. 10 to 12;
Figs. 14 and 15 are perspective views of details of the drive part of Figs. 10 to 13;
Fig. 16 is a front view of the drive part of Figs. 10 to 15; and
Fig. 17 is a front view of the drive part of Figs. 10 to 16 assembled in a roller tube of a screening arrangement in an embodiment of the invention.

### Description of Embodiments

In the following detailed description, a preferred embodiment of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations.

It is noted that terms such as "up", "down", "left-hand", "right-hand", "exterior", "interior", "outer", "inner" are relative and refers to the viewpoint in question. In general, when referred to an exterior side, this relates to a side of a roof window in the mounted condition facing the outdoors or external side of the building. Conversely, an interior side refers to a side facing the internal side of the building, i.e. typically a subjacent room including any light shaft. Terms such as "outwards" and "inwards" are directions generally perpendicular to an interior-exterior direction, taking as its base point a centre of the roof window or a screening arrangement. A longitudinal direction is, if nothing else is mentioned, longitudinal along the length of a frame member of the roof window or of a component of the screening arrangement. It is to be understood that any arrangement shown in a vertical or horizontal orientation is not the normal orientation as the roof window is installed in an inclined roof.

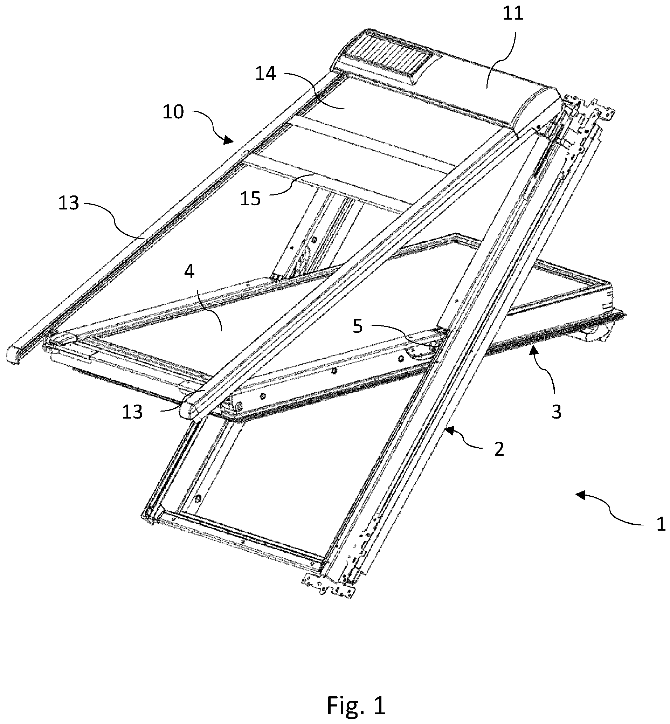

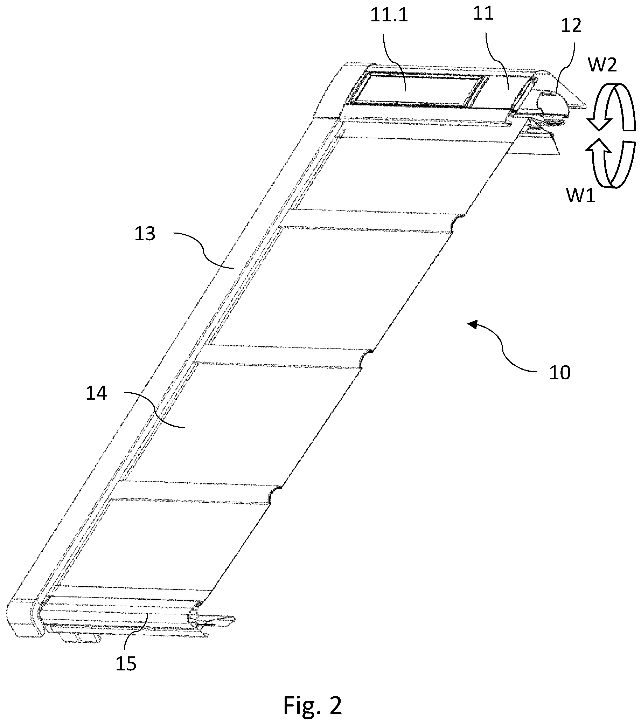

Referring initially to Figs. 1 and 2, a screening arrangement 10 is shown to represent an exemplary, general embodiment of an external screening arrangement to be mounted on an exterior side of a window, here a roof window 1. The roof window 1 comprises a stationary frame 2 and an openable frame in the form of a sash 3 carrying a pane 4. The roof window 1 in the shown configuration is openable in that the sash 3 performs a pivoting movement around a hinge axis defined by a set of hinges of which one hinge 5 is shown. The principles underlying the present invention are applicable to other types of screening arrangements which may be configured to be mounted on other types of windows.

The screening arrangement 10 comprises a top casing 11 accommodating a roller tube 12 (Fig. 2). Furthermore, the screening arrangement here comprises two side rails 13, a screening body 14, and a bottom element 15. The screening body 14 is movable in a general longitudinal direction between a non-screening position and a number of screening positions in which the screening body 14 at least partially covers an opening of the roof window 1. During the movement, side edges of the screening body 14 and/or longitudinal ends of the bottom element 15 may be guided in the side rails 13.

In the embodiment shown, the roller tube 12 is used to store the wound-up screening body 14 of the screening arrangement 10 and to that end, one end portion of the screening body 14 is fastened to the roller tube 12; however it is possible to use the roller tube 12 simply for winding and unwinding any cords used to move the screening body 14 while the screening body 14 is stored in a different manner in the non-screening position.

Other details shown in Figs. 1 and 2 include a solar panel 11.1 which could be used to power the screening arrangement 10, possibly connected to battery means in the top casing 11; however, power may also be provided from a main housing supply.

Examples of screening arrangements corresponding to the one shown in Figs. 1 and 2 are shown in the embodiments of WO 2021/104592 A1. As already mentioned, the type of screening arrangement is not limiting since the underlying principles of the invention may be applied to other types of external screening arrangements such as roller shutters, awnings, marquisettes etc., and internal screening arrangements.

In an assembled condition of any such screening arrangement in which the tubular drive arrangement 20 is to be applied, the tubular drive arrangement 20 is configured to be positioned within the roller tube 12 in the top casing 11 of the screening arrangement 10. To that end, the roller tube 12 of the embodiments shown comprises a hollow body with a substantially cylindrical circumference. The outer surface of the circumference here serves to store windings of the screening body 14.

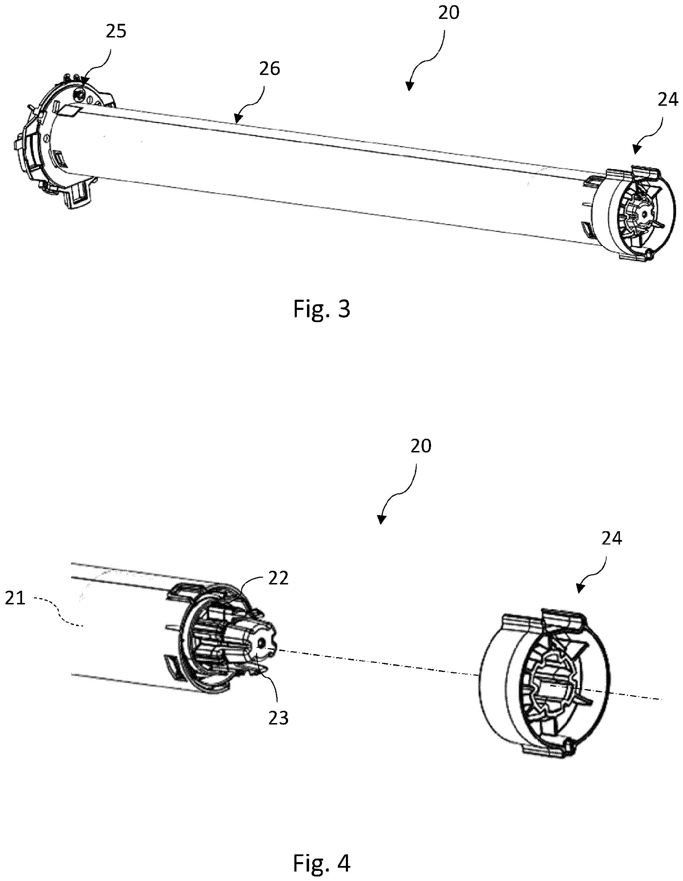

In the following, drive means configured to rotate the roller tube 12 in a winding direction W1 and an unwinding direction W2 as indicated in Fig. 2 will be described with particular reference to a first embodiment of a tubular drive arrangement 20 shown in Figs 3 to 6.

Throughout the drawings and description, elements having the same or analogous function are denoted by the same reference numerals. Only differences between the embodiments will be described in detail.

The tubular drive arrangement 20 comprises an electric drive motor 21, a gear 22, a drive shaft 23, and a drive part 24 coupled to the drive shaft 23. The general configuration of the electric drive motor 21, the gear 22, and the drive shaft 23 is well-known in the art and only indicated schematically.

As shown in Fig. 3, the tubular drive arrangement 20 here comprises an end part 25 configured to be fastened to an end of the top casing 11 of the screening arrangement 10. The end part 25 is positioned at an opposite longitudinal end of the drive shaft 23 relative to the drive part 24. A shell part 26 forms an enclosure for components which, in addition to the electric drive motor 21 and gear 22, may include printed circuit boards, wiring, battery means, antenna(e) etc. (not shown).

The drive part 24 is configured to be connectable to the drive shaft 23 as indicated by the exploded view in Fig. 4. To allow for connection of the drive part 24 to the roller tube 12 of the screening arrangement 10, the drive part 24 comprises engagement means configured to be connected to counterpart engagement means of the roller tube 12 as will be described in further detail below.

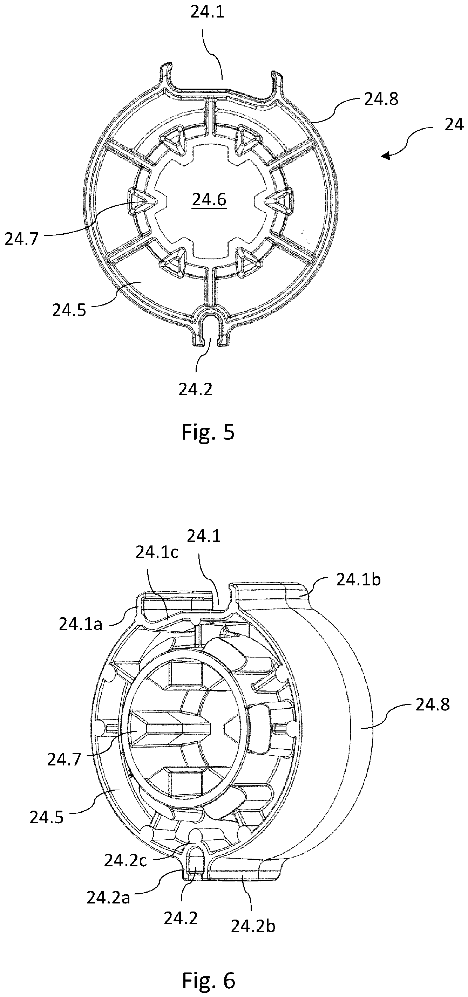

With particular reference to Figs. 5 and 6, the drive part 24 which functions as a coupler or motor head is formed as a substantially disc-shaped component in the first embodiment of the tubular drive arrangement 20. The drive part 24 comprises a base portion 24.5 with a central aperture 24.6 configured to receive the drive shaft 23 in the assembled condition of the tubular drive arrangement 20, and a perimeter portion 24.8 defining a periphery of the drive part 24.

A set of teeth 24.7 is here provided in the central aperture 24.6 to interact with the drive shaft 23, which is provided by suitable counterpart toothing.

The engagement means of the drive part 24 to engage with the roller tube 12 here comprise a set of recesses 24.1, 24.2 positioned at different angular positions, namely here a first recess 24.1 and a second recess 24.2 positioned at substantially opposite positions along the perimeter 24.8 of the drive part 24.

In the assembled condition of the tubular drive arrangement 20 in the screening arrangement 10, the set of recesses 24.1, 24.2 of the drive part 24 in the embodiment shown is configured to cooperate with a set of protrusions provided in the roller tube 12 and forming the counterpart engagement means of the roller tube 12 of the screening arrangement 10.

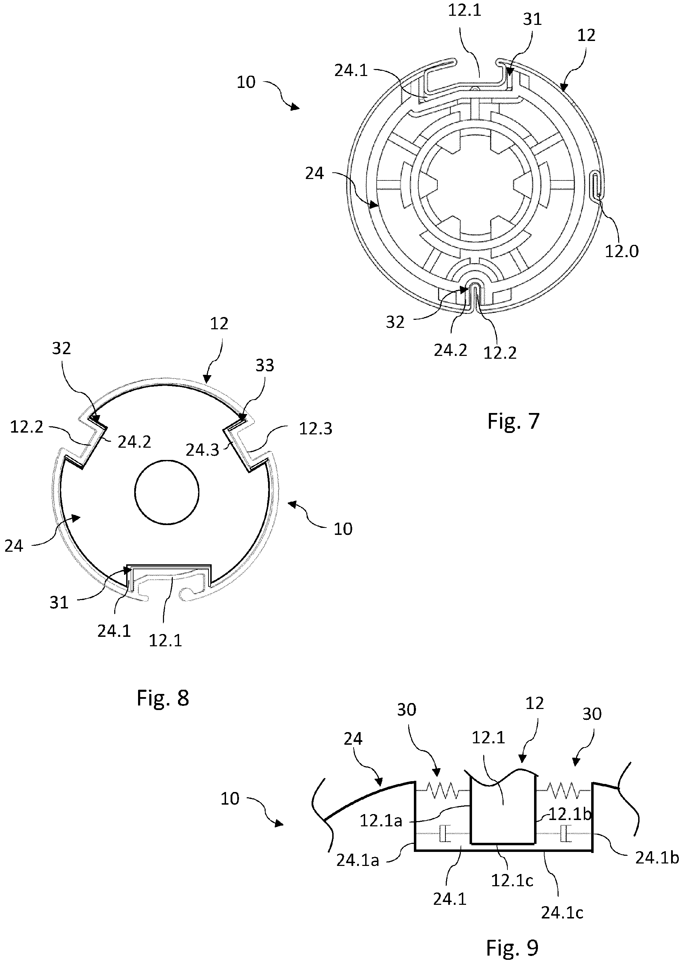

Referring now also to Fig. 7, showing a second embodiment of the tubular drive arrangement 20, the drive part 20 is shown interacting with the roller tube 12 via a set of resilient dampers 31, 32.

It is noted that such a set of resilient dampers 31, 32, or any of the type of resilient damper of the invention may be applied to the tubular drive arrangement of the above-mentioned first embodiment as well. Correspondingly, the roller tube 12 of the second embodiment may be used in the first embodiment. Wherever appropriate, details of embodiments will be described jointly.

The set of protrusions of the roller tube 12 of the second embodiment comprises a first protrusion 12.1 and a second protrusion 12.2 provided on a radially inner side of the circumference of the roller tube 12. The roller tube 12 is here made of a thin-walled metal material such as aluminium, and the overall geometry including protrusions 12.1, 12.2 are formed by roll forming, including folded longitudinal edge portions to provide a locking section 12.0.

The resilient dampers 31, 32 are here integrally connected to the respective recesses 24.1, 24.2 forming the engagement means of the drive part 24 by co-moulding; however the resilient dampers 31, 32 could also be provided as separate elements which are connected to the drive part 24 in a separate operation.

In that regard, it is preferred that the drive part 24 comprises a first material with a first set of material properties as defined by Shore A value and/or E modulus. An exemplary material for the drive part 24 is a relatively hard plastic material, and the drive part 24 is for instance formed as a moulded component of a reinforced polymer material such as PBT GF30.

Correspondingly, each resilient damper 31, 32 of the second embodiment comprises a one-piece component of a second material with a second set of material properties as defined by Shore A value and/or E modulus. A material with superior qualities has proven to be a silicone material such as a liquid silicone rubber LSR material with a Shore A value below 90, or below 70, for instance a Shore A value of 60.

Referring now to Fig. 8, a third embodiment of the screening arrangement 10 is shown. The roller tube 12 is here formed as an extruded profile, for instance of aluminium, with three protrusions 12.1, 12.2, 12.3 formed to protrude towards the interior. The drive part 24 is formed with three corresponding recesses 24.1, 24.2, 24.3. The protrusions 12.1, 12.2, 12.3 and the recesses 24.1, 24.2, 24.3 are distributed substantially equidistantly over the circumference of the drive part 24 at an angle of approximately 120° between neighbouring pairs. As appears, three resilient dampers 31, 32, 33 are provided to match, and in this embodiment, they are connected to the respective protrusions 12.1, 12.2, 12.3 of the roller tube 12 and hence connectable to the recesses 24.1, 24.2, 24.3 in the assembled condition of the screening arrangement 10. The connection between the resilient dampers 31, 32, 33 and the roller tube 12 may be performed by co-extrusion, or by separate application of the resilient dampers 31, 32, 32 to the protrusions 12.1, 12.2, 12.3 of the roller tube 12.

Referring now further to Fig. 9, a fourth embodiment is shown schematically. As an alternative to the one-piece, integral resilient dampers of the above embodiments, a resilient damper 30 of the fourth embodiment could be formed of a two-part component comprising a pressure spring and a suitable damping material which are combined into a spring-dashpot unit as indicated. For instance, the resilient damper 30 could be formed as a pressure spring combined with a block of resilient material.

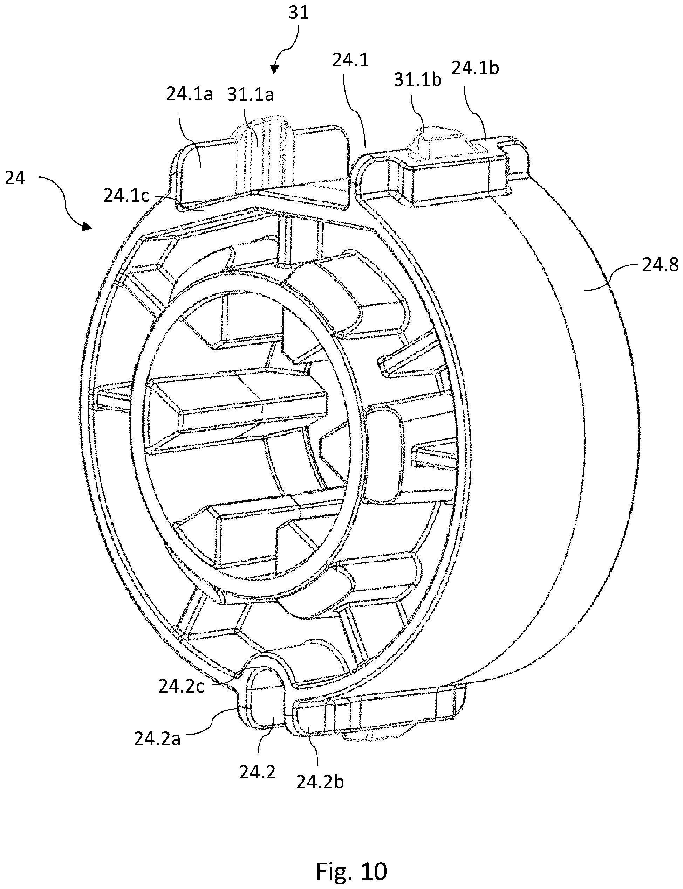

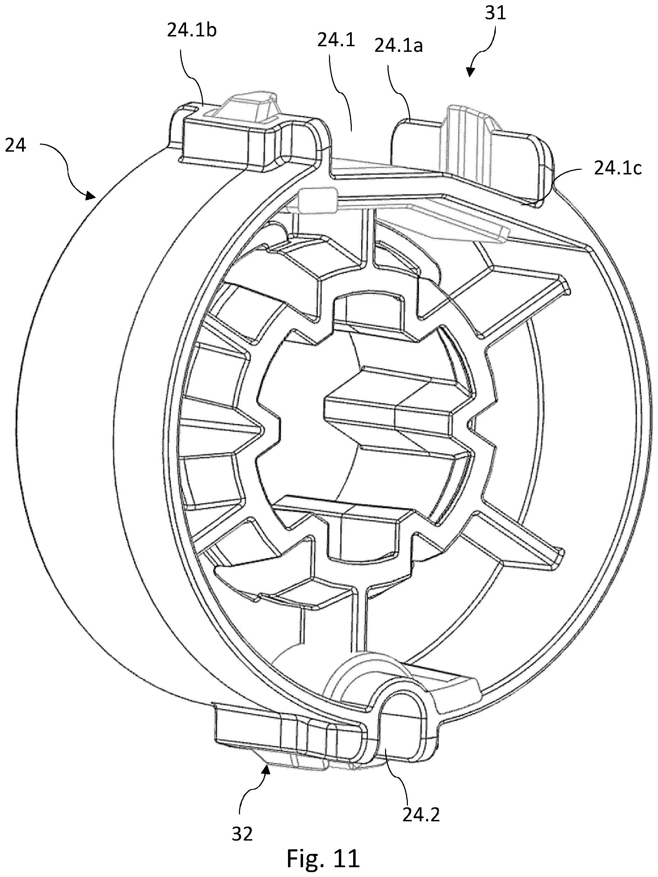

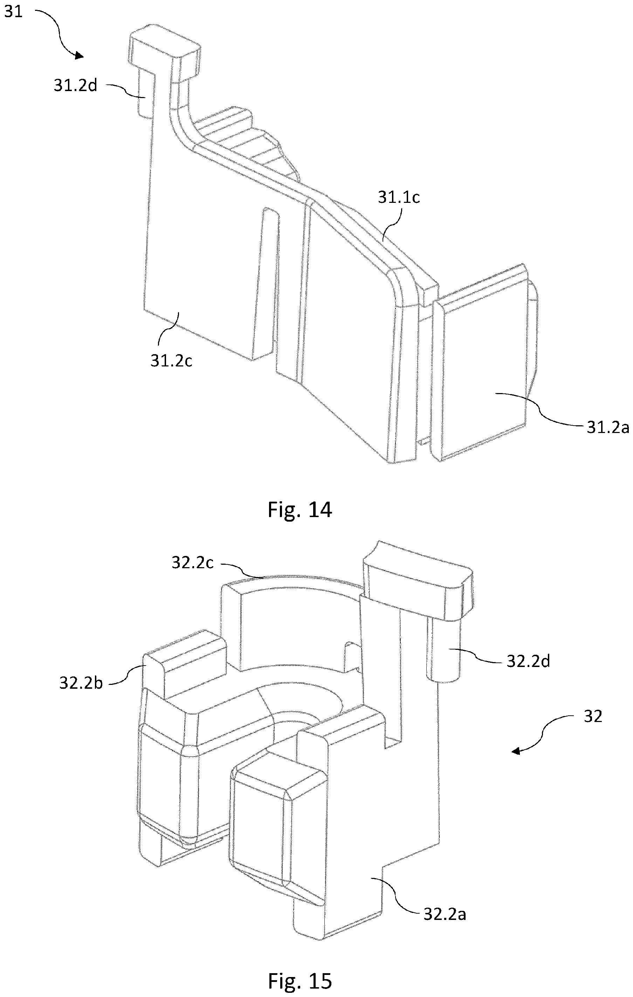

Finally, reference is also made to Figs. 10 to 17 in which details of a fifth embodiment of the tubular drive arrangement 20 and an embodiment of the screening arrangement 10 is shown. For overview, the fifth embodiment is more similar to the first and second embodiments than to the third and fourth embodiments. In the following, reference will be made to the two resilient dampers 31 and 32 of the fifth embodiment of the tubular drive arrangement 20, but the principles may be applied to any of the resilient damper 30; 31, 32, 33 described in the above.

In general, the resilient damper(s) may thus provide a spring force and damping between the engagement means of the drive part of the tubular drive arrangement and the counterpart engagement means of the roller tube of the screening arrangement in the tangential direction only, or also in a radial direction.

Thus, with particular reference to Figs. 6, 10 and 17, it is noted that each resilient damper 31, 32 of the shown embodiments is configured to be positioned in a space defined between walls 24.1a, 24.1b, 24.1c, 24.2a, 24.2b, 24.2c of the respective recess 24.1, 24.2 and facing surfaces including side surfaces 12.1a, 12.1b and bottom surface 12.1c of the corresponding protrusion 12.1 of the roller tube 12 of the screening arrangement 10 in the assembled condition such that a set of well-defined contact points between the respective resilient dampers and the protrusions is formed.

With continued reference to Fig. 10, it is noted that in order to obtain a large contact surface, it is beneficial that the walls of the respective recess 24.1, 24.2 comprise side walls 24.1a, 24.1b, 24.2a, 24.2b protruding beyond the perimeter portion 24.8 of the drive part 24 in the radial direction. The walls may also comprise a bottom wall 24.1c, 24.2c forming an angle to the side walls 24.1a, 24.1b, 24.2a, 24.2b and located radially inside the perimeter portion 24.8 of the drive part 24.

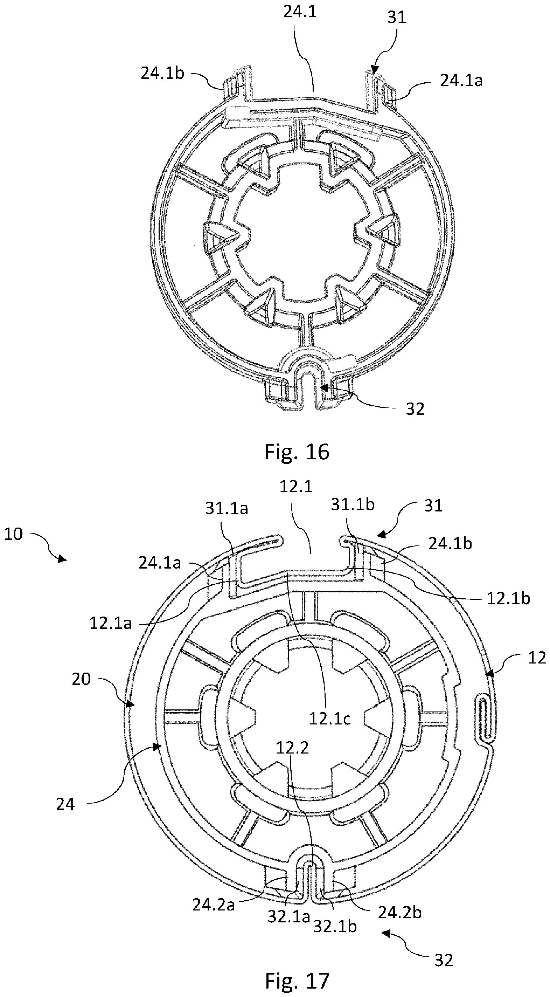

Furthermore, it is seen that each resilient damper 31, 32 of the fifth embodiment comprises a set of side contact portions 31.1a, 31.1b, 32.1a, 32.1b configured to interact with the side walls 24.1a, 24.1b, 24.2a, 24.2b of the respective recess 24.1, 24.2. In the fifth embodiment, the side contact portions 31.1a, 31.1b, 32.1a, 32.1b have a larger extension in the radial direction than the side walls such that a radially outer surface of the side contact portions are in contact with the roller tube 12 in the assembled condition as shown in Fig. 17. In this way, safe transmission of the forces resulting from operation is obtained.

During rotation of the roller tube 12 by means of the drive part 24 of the tubular drive arrangement 20, the drive part 24 will mainly act on one side surface of the protrusions 12.1, 12.2 at the time depending on whether rotation takes place in the winding or unwinding direction, i.e. with reference to Fig. 17 at the left-hand side surface 12.1a of the first protrusion 12.1 and the right-hand side surface (not indicated) of the second protrusion 12.2 during counter-clockwise rotation. However, since vibrations from the motor of the tubular drive arrangement 20 may affect the entire area at the engagement means, not only contact portions 31.1a and 32.1b are active, but also the contact surfaces at the other contact portions of the resilient dampers 31, 32 may contribute to the reduction of vibrations and ensuing noise.

In this regard, it is preferred to select such dimensions of each resilient damper 31, 32 so as to ensure a minimum clearance between the drive part 24 and the roller tube 12. Thus, when one or both of the resilient dampers 31, 32 is/are compressed to a maximum extent, for instance the left-hand contact portion 31.1a of Fig. 17 in the above-mentioned example, the distance between the left-hand side wall 24.1a of the first recess 24.1 and the side surface 12.1a of the first protrusion 12.1 should assume a minimum value of for instance 1 mm. That is, the first resilient damper 31 should have a thickness of at least 1 mm when compressed to its full extent, for instance in the range 1 to 2 mm. Depending on other parameters of the chosen material and shape of the resilient damper 31, this could correspond to a relaxed thickness in the range 2 to 5 mm.

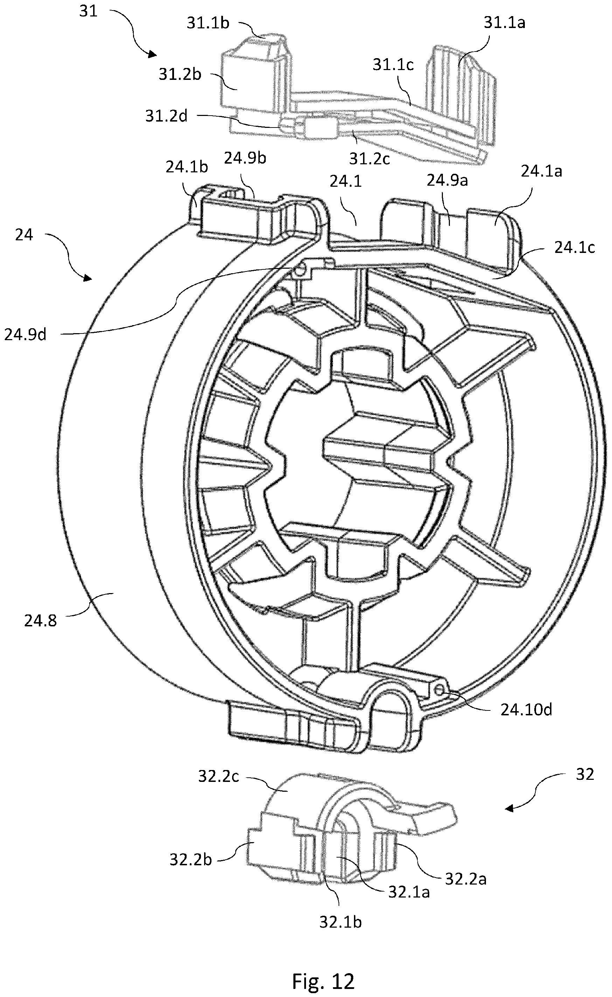

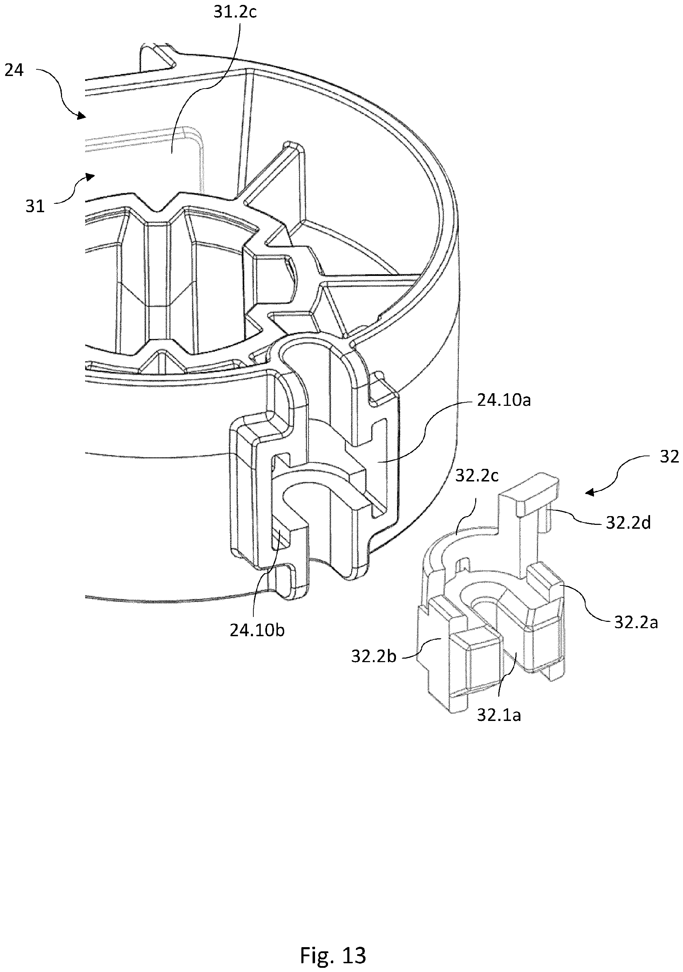

In order to ensure safe retention of the resilient damper(s) 31, 32, each resilient damper 31, 32 of the embodiment shown comprises a set of anchor portions configured to cooperate with a counterpart set of openings of the recesses 24.1, 24.2 in the drive part 24 as emerges most clearly from the exploded views of Figs. 12 and 13.

In the embodiment shown, the anchor portions comprise at least a set of side anchor portions 31.2a, 31.2b, 32.2a, 32.2b for cooperation with cut-outs 24.9a, 24.9b, 24.10a, 24.10b in the side walls 24.1a, 24.1b, 24.2a, 24.2b of the recesses 24.1, 24.2.

Bottom anchor portions 31.2c, 32.2c may as shown be provided to interact with openings provided at the recesses 24.1, 24.2 in the drive part 24 such that a form-locking engagement between the resilient dampers 31, 32 and the respective recess 24.1, 24.2 is achieved at the bottom of each recess.

Furthermore, also a pin anchor portion 31.2d, 32.2d for cooperation with a hole 24.9d, 24.10d at the perimeter portion 24.8 of the drive part 24 may be provided.

The geometry allowing interaction between anchor portions and openings in the resilient damper(s) and drive part 24 is readily formed regardless of whether the resilient damper(s) are made as separate components to be connected to the drive part 24 or by co-moulding.

As already mentioned, dampening in the tangential direction is vital, and as such, it is conceivable to provide only the sides of the recesses/protrusions contact points with resilient dampers; however, it may for manufacturing purposes be advantageous to form each resilient damper as a coherent one-piece component. To this end, each resilient damper 31, 32 may be formed as a substantially U-shaped element and comprise a bottom portion 31.1c, 32.1c between the side contact portions 31.1a, 31.1b, 32.1a, 32.1b, the bottom portion 31.1c comprising at least one substantially plane section as for the first resilient damper 31 or the bottom portion 32.1c being curved as in the second resilient damper 32.

A suitable method of assembling a screening arrangement 10 as described in the above may comprise the steps of:
providing a tubular drive arrangement 20 with electric drive motor 21, gear 22, drive shaft 23, and drive part 24,
providing a roller tube 12,
providing at least one resilient damper 30; 31, 32; 31, 32, 33,
connecting the at least one resilient damper 30; 31, 32; 31, 32, 33 to engagement means 24.1, 24.2 of the drive part 24 of the tubular drive arrangement 20 and/or to counterpart engagement means 12.1, 12.2; 12.3 of the roller tube 12,
arranging the tubular drive arrangement 20 in the roller tube 12 to assume an assembled condition of the tubular drive arrangement 20, and
placing the assembled tubular drive arrangement 20 and roller tube 12 in the top casing 11 of the screening arrangement 10, thereby obtaining an assembled condition of the screening arrangement 10.

In an alternative embodiment, a tubular drive arrangement 20 for a screening arrangement 10 for a window such as a roof window 1 is provided, comprising
an electric drive motor 21,
a gear 22,
a drive shaft 23,
a drive part 24 coupled to the drive shaft and comprising engagement means configured to be connected to counterpart engagement means of a roller tube 12 of the screening arrangement in an assembled condition, and
an end part 25 positioned at an opposite longitudinal end of the drive shaft 23 relative to the drive part 24,
wherein the end part 25 comprises at least one resilient damper.

Modifications and combinations between embodiments are conceivable.

### List of reference numerals

1 roof window
2 stationary frame
3 openable frame (sash)
4 pane
5 hinge
10 screening arrangement
11 top casing (cassette, rail, box)
   11.1 solar panel
12 roller tube
   12.0 locking section
   12.1 first protrusion
   12.1a side surface of first protrusion
   12.1b side surface of first protrusion
   12.1c bottom surface of first protrusion
   12.2 second protrusion
   12.3 third protrusion
13 side rails
14 screening body
15 bottom element
20 tubular drive arrangement
21 electric drive motor
22 gear
23 drive shaft
24 drive part
   24.1 first recess
   24.1a side wall of first recess
   24.1b side wall of first recess
   24.1c bottom wall of first recess
   24.2 second recess
   24.2a side wall of second recess
   24.2b side wall of second recess
   24.2c bottom wall of second recess
   24.3 third recess
   24.5 base portion
   24.6 central aperture
   24.7 set of teeth
   24.8 perimeter portion
   24.9a cut-out (to receive side anchor portion)
   24.9b cut-out (to receive side anchor portion)
   24.9d hole (to receive pin anchor portion)
   24.10a cut-out
   24.10b cut-out
   24.10d hole
25 end part
26 shell part
30 resilient damper (general)
31 resilient damper
   31.1a side contact portion
   31.1b side contact portion
   31.1c bottom portion
   31.2a side anchor portion
   31.2b side anchor portion
   31.2c bottom anchor portion
   31.2d pin anchor portion
32 resilient damper
   32.1a side contact portion
   32.1b side contact portion
   32.1c bottom portion
   32.2a side anchor portion
   32.2b side anchor portion
   32.2c bottom anchor portion
   32.2d pin anchor portion
33 resilient damper
W1 winding direction
W2 unwinding direction

## Claims

1. A tubular drive arrangement (20) for a screening arrangement (10) for a window such as a roof window (1), comprising
an electric drive motor (21),
a gear (22),
a drive shaft (23), and
a drive part (24) coupled to the drive shaft and comprising engagement means configured to be connected to counterpart engagement means of a roller tube (12) of the screening arrangement in an assembled condition,
**characterised in that** the tubular drive arrangement (20) further comprises at least one resilient damper (30; 31, 32; 31, 32, 33), and the at least one resilient damper (30; 31, 32; 31, 32, 33) is connected to or connectable to the engagement means (24.1, 24.2, 24.3) of the drive part (24).

2. A tubular drive arrangement (20) according to claim 1, wherein the drive part (24) is formed as a substantially disc-shaped component, comprising a base portion (24.5) with a central aperture (24.6) configured to receive the drive shaft (23) in the assembled condition of the tubular drive arrangement (20), and a perimeter portion (24.8) defining a periphery of the drive part (24), a set of teeth (24.7) being preferably provided in the central aperture (24.6) to interact with the drive shaft (23).

3. A tubular drive arrangement (20) according to claim 2, wherein the engagement means of the drive part (24) comprise a set of recesses (24.1, 24.2, 24.3), preferably positioned at different angular positions, more preferably comprising a first recess (24.1) and a second recess (24.2) positioned at substantially opposite positions along the perimeter (24.8) of the drive part (24), said set of recesses being configured to cooperate with a set of protrusions (12.1, 12.2; 12.3) provided in the roller tube (12) and forming the counterpart engagement means of the roller tube of the screening arrangement.

4. A tubular drive arrangement (20) according to claim 2 or 3, wherein the drive part (24) comprises a first material with a first set of material properties as defined by Shore A value and/or E modulus, preferably of a relatively hard plastic material, such as a material with a Shore A value of above 90, the drive part (24) being more preferably provided as a moulded component of a reinforced polymer material such as PBT GF30.

5. A tubular drive arrangement (20) according to any one of the preceding claims, wherein each resilient damper (30; 31, 32; 31, 32, 33) comprises a component having a pre-defined damping capacity and being capable of being formed to offer a range of resilient or spring-like properties.

6. A tubular drive arrangement (20) according to claim 5, wherein each resilient damper (30; 31, 32; 31, 32, 33) comprises a one-piece component of a second material with a second set of material properties as defined by Shore A value and/or E modulus, preferably a silicone material such as a liquid silicone rubber (LSR) material with a Shore A value below 90, more preferably a Shore A value below 70, most preferably a Shore A value of 60.

7. A tubular drive arrangement (20) according to any one of claims 2 to 6, wherein each resilient damper (30; 31, 32; 31, 32, 33) is configured to be positioned in a space defined between walls (24.1a, 24.1b, 24.1c, 24.2a, 24.2b, 24.2c) of the respective recess (24.1, 24.2) and facing surfaces (12.1a, 12.1b, 12.1c) of the corresponding protrusion (12.1) of the roller tube (12) of the screening arrangement (10) in the assembled condition of the tubular drive arrangement (20) such that a set of well-defined contact points between the resilient damper(s) and the protrusion(s) is formed.

8. A tubular drive arrangement (20) according to claim 7, wherein each resilient damper (31, 32) is provided in a respective recess (24.1, 24.2) of the drive part (24), preferably as a one-piece component which is co-moulded with the drive part (24).

9. A tubular drive arrangement (20) according to any one of claims 7 to 8 when dependent on at least claim 3, wherein the walls (24.1a, 24.1b, 24.1c, 24.2a, 24.2b, 24.2c) of the respective recess (24.1, 24.2) comprise side walls (24.1a, 24.1b, 24.2a, 24.2b), said side walls preferably protruding beyond the perimeter portion (24.8) of the drive part (24) in the radial direction, the walls more preferably comprising a bottom wall (24.1c, 24.2c) forming an angle to the side walls (24.1a, 24.1b, 24.2a, 24.2b) and located radially inside the perimeter portion (24.8) of the drive part (24).

10. A tubular drive arrangement (20) according to claim 9, wherein each resilient damper (31, 32) comprises a set of side contact portions (31.1a, 31.1b, 32.1a, 32.1b) configured to interact with the side walls (24.1a, 24.1b, 24.2a, 24.2b) of the respective recess (24.1, 24.2), said side contact portions (31.1a, 31.1b, 32.1a, 32.1b) preferably having a larger extension in the radial direction than the side walls such that a radially outer surface of the side contact portions are in contact with the roller tube (12) in the assembled condition.

11. A tubular drive arrangement (20) according to claim 9 or 10, wherein each resilient damper (31, 32) comprises a set of anchor portions (31.2a, 31.2b, 31.2c, 31.2d, 32.2a, 32.2b, 32.2c, 32.2d) configured to cooperate with a counterpart set of openings (24.9a, 24.9b, 24.9d, 24.10a, 24.10b, 24.10d) of the recesses (24.1, 24.2) in the drive part (24), preferably comprising at least a set of side anchor portions (31.2a, 31.2b, 32.2a, 32.2b) for cooperation with cut-outs (24.9a, 24.9b, 24.10a, 24.10b) in the side walls (24.1a, 24.1b, 24.2a, 24.2b) of the recesses (24.1, 24.2), more preferably comprising also a pin anchor portion (31.2d, 32.2d) for cooperation with a hole (24.9d, 24.10d) at the perimeter portion (24.8) of the drive part (24).

12. A tubular drive arrangement (20) according to claim 10 or 11, wherein each resilient damper (31, 32) is substantially U-shaped and comprises a bottom portion (31.1c, 32.1c) between the side contact portions (31.1a, 31.1b, 32.1a, 32.1b), the bottom portion (31.1c) comprising at least one substantially plane section or the bottom portion (32.1c) being curved.

13. A screening arrangement (10) for a window such as a roof window (1), comprising
a top casing (11),
a roller tube (12) arranged in the top casing (11) and comprising counterpart engagement means, and
a tubular drive arrangement (20) according to any one of claims 1 to 12 arranged in the roller tube (12) in the top casing (11), the engagement means of the drive part (24) being connected to the counterpart engagement means of the roller tube (12) in the assembled condition of the tubular drive arrangement in the screening arrangement.

14. A screening arrangement (10) according to claim 13, wherein the roller tube (12) comprises a hollow body with a substantially cylindrical circumference and the engagement means of the roller tube (12) comprise a set of protrusions (12.1, 12.2; 12.3) provided on a radially inner side of the circumference.

15. A screening arrangement (10) according to claim 14, wherein the roller tube (12) is made of a thin-walled metal material such as aluminium, and wherein said set of protrusions (12.1, 12.2; 12.3) are formed by roll forming or extrusion.

16. A screening arrangement (10) according to any one of claims 13 to 15, wherein the at least one resilient damper (30; 31, 32) is connected to the engagement means (24.1, 24.2) of the drive part (24).

17. A screening arrangement (10) according to any one of claims 13 to 16, wherein the at least one resilient damper (30; 31, 32, 33) is connected to the counterpart engagement means (12.1, 12.2, 12.3) of the roller tube (12).

18. A method of assembling a screening arrangement (10) according to any one of claims 13 to 17, comprising the steps of:
providing a tubular drive arrangement (20) with electric drive motor (21), gear (22), drive shaft (23), and drive part (24),
providing a roller tube (12),
providing at least one resilient damper (30; 31, 32; 31, 32, 33),
connecting the at least one resilient damper (30; 31, 32; 31, 32, 33) to engagement means (24.1, 24.2) of the drive part (24) of the tubular drive arrangement (20) and/or to counterpart engagement means (12.1, 12.2; 12.3) of the roller tube (12),
arranging the tubular drive arrangement (20) in the roller tube (12) to assume an assembled condition of the tubular drive arrangement (20), and
placing the assembled tubular drive arrangement (20) and roller tube (12) in the top casing (11) of the screening arrangement (10), thereby obtaining an assembled condition of the screening arrangement (10).
